# EUROPÄISCHE PATENTANMELDUNG

(11) **EP 3 889 103 A1**
(43) Veröffentlichungstag der Anmeldung: **06.10.2021**
(21) Anmeldenummer: 21161410.2
(22) Anmeldetag: 09.03.2021
(51) Int. Cl.: C01B 3/00, F17C 11/00

(54) **WASSERSTOFFSPEICHERBEHÄLTER**

(30) Priorität: 01.04.2020 DE 102020204214
(71) Anmelder: FRAUNHOFER-GESELLSCHAFT zur Förderung der angewandten Forschung e.V., 80686 München (DE)
(72) Erfinder: Röntzsch, Lars, 01277 Dresden (DE); Heubner, Fellix, 01277 Dresden (DE)
(74) Vertreter: Pfenning, Meinig & Partner mbB

(57) **Zusammenfassung**

Der Wasserstoffspeicherbehälter weist zumindest einen einen Hohlraum (14) bildendenden Hohlkörper (16) auf, in dem zumindest ein erstes hydrierbares Wasserstoffspeichermaterialangeordnet ist, das bei einer Aktivierung durch Wasserstoff eine erste Aktivierungsgeschwindigkeit aufweist. Außerdem ist in dem Hohlraum (16) ein zweites hydrierbares Wasserstoffspeichermaterial angeordnet, das bei Aktivierung durch Wasserstoff eine zweite Aktivierungsgeschwindigkeit aufweist, die höher ist als die des ersten hydrierbaren Wasserstoffspeichermaterials.

## Beschreibung

Die Erfindung bezieht sich auf das Gebiet der Wasserstoffspeicherbehälter auf Basis reversibel hydrierbarer Speichermaterialen, deren Herstellung und insbesondere der Aktivierung dieser Speichermaterialien vor einer Inbetriebnahme.

Beispielsweise ist aus US 2007/025908 A1 ein Wasserstoffspeicherbehälter bekannt, indem zu einem Wasserstoffspeichermaterial ein katalytisch wirkendes Hydrid hinzugegeben wird, das jedoch nicht aktiv der Wasserstoffspeicherung und Abgabe dient.

Der Erfindung liegt die Aufgabe zugrunde, einen Wasserstoffspeicherbehälter bereitzustellen, in dem ein hydrierbares Wasserstoffspeichermaterial enthalten ist, das mit geringem Aufwand aktivierbar ist.

Diese Aufgabe wird erfindungsgemäß durch die Merkmale des Hauptanspruchs gelöst.

Durch die in den Unteransprüchen vorgegebenen Maßnahmen sind vorteilhafte Weiterbildungen und Verbesserungen möglich.

Der erfindungsgemäße Wasserstoffspeicherbehälter umfasst zumindest einen, einen Hohlraum bildendenden Hohlkörper und zumindest ein erstes, insbesondere reversibel, hydrierbares Wasserstoffspeichermaterial, das in dem Hohlraum angeordnet ist und das eine erste Aktivierungsgeschwindigkeit aufweist, wobei in dem Hohlraum ein zweites, insbesondere reversibel, hydrierbares Wasserstoffspeichermaterial angeordnet ist, das insbesondere unter gleichen Aktivierungsbedingungen insbesondere gleichen Druck- und Temperaturverhältnissen, eine zweite Aktivierungsgeschwindigkeit aufweist, die höher als die des ersten hydrierbaren Wasserstoffspeichermaterials ist. Durch die Kombination eines hydrierbaren Wasserstoffspeichermatererials mit einer hohen Aktivierungsgeschwindigkeit mit einem hydrierbaren Wasserstoffspeichermatererial mit niedriger Aktivierungsgeschwindigkeit kann insbesondere erreicht werden, dass die Aktivierungsgeschwindigkeit des Systems beider Wasserstoffspeichermaterialien gemeinsam höher als die des Wasserstoffspeichermaterials mit der niedrigeren Aktivierungsgeschwindigkeit ist. Insbesondere können durch die Kombination der beiden Wasserstoffspeichermaterialien Kosten reduziert werden im Vergleich zu Anwendungsfällen, in denen entweder lediglich das üblicherweise kostenintensivere Wasserstoffspeichermaterial mit der hohen Aktivierungsgeschwindigkeit Verwendung findet oder lediglich das kostengünstige Speichermaterial eingesetzt wird und der Speicherbehälter somit einer zeit- und energieintensiven Aktivierungsprozedur (z.B. zyklische Änderung von Gasdruck und/oder Temperatur) unterzogen werden muss.

Unter einem "hydrierbaren Wasserstoffspeichermaterial" (im Verlauf der Anmeldung synonym mit Wasserstoffspeichermaterial oder Speichermaterial verwendet) kann beispielsweise ein Material verstanden werden, das dazu geeignet ist, unter bestimmten Bedingungen, beispielsweise dem Vorliegen einer Wasserstoffatmosphäre bei einem bestimmten Druck oder in einem bestimmten Druckbereich, Wasserstoff durch chemische Bindung (Hydrierung), insbesondere zusätzlich zu Adsorption von Wasserstoff, aufzunehmen. Beispielsweise können derartige Speichermaterialien, insbesondere nach einer Aktivierung, zumindest 0,5 Masse-Prozent, beispielsweise zumindest 1 Masse-Prozent, beispielsweise zumindest 1,5 Masse-Prozent Wasserstoff im Vergleich zu einem unhydrierten Zustand des Speichermaterials aufnehmen. Insbesondere sind sowohl das erste als auch das zweite Speichermaterial dazu vorgesehen, in im Wesentlichen ähnlichem Druckbereich Wasserstoff aufzunehmen und abzugeben. Insbesondere sind beide Speichermaterialen dazu geeignet, bei einem oberen Betriebsdruck jeweils Wasserstoff aufzunehmen. Insbesondere sind beide Speichermaterialen dazu geeignet, bei einem unteren Betriebsdruck jeweils Wasserstoff freizusetzen.

Unter einer "Aktivierung" kann beispielsweise ein Vorgang verstanden werden, bei der ein Speichermaterial, insbesondere vor einer Inbetriebnahme und/oder nach der Herstellung des Speicherbehälters, darauf vorbereitet wird, Wasserstoff aufzunehmen. Insbesondere wird eine Wasserstoffspeicherkapazität des Wasserstoffspeichermaterials bei der Aktivierung um zumindest 0,3 Masse-Prozent, insbesondere zumindest 0,5 Masse-Prozent, insbesondere zumindest 1 Masse-Prozent angehoben. Insbesondere wird nach einer Aktivierung eine Wasserstoffspeicherkapazität erreicht, die zumindest 50 %, insbesondere zumindest 90 % einer theoretischen maximalen Wasserstoffspeicherkapazität erreicht. Es können aber auch Werte erreicht werden, die bis zu 98 % reichen können. Üblicherweise liegt vor der Aktivierung eine Wasserstoffspeicherkapazität von "0" vor. Sie sollte aber maximal 70%, insbesondere maximal 30 %, insbesondere maximal 10 %, insbesondere maximal 5 %, der theoretischen maximalen Wasserstoffspeicherkapazität entsprechen. Durch die Aktivierung kann also eine Abweichung der Speicherkapazität des Speichermaterials von der theoretischen maximalen Speicherkapazität um zumindest 10 %, insbesondere um zumindest 20 %, insbesondere um zumindest 40 %, insbesondere um zumindest 80 % erreicht werden.

Vorzugsweise werden bei der Aktivierung des Speichermaterials, auf dessen Oberfläche angelagerte Verunreinigungen, wie beispielsweise Sauerstoff, Wasser, Fette, und/oder weitere Gase oder weitere organische Verbindungen und/oder an der Oberfläche gebildete Oxid- und/oder Hydroxidschichten aufgebrochen, verdrängt, abgebaut und/oder entfernt.

Insbesondere verändert sich bei der Aktivierung des Speichermaterialen dessen Partikelgröße, beispielsweise durch volumenausdehnungsbedingte Dekrepitation. Insbesondere werden Oberflächenschichten aufgebrochen. Insbesondere sollte der Hohlraum des Wasserstoffspeicherbehälters bei der Aktivierung einer Wasserstoffatmosphäre, beispielsweise mit während der Aktivierung wiederholt verändertem Druck, und/oder einer, insbesondere gegenüber Raumtemperatur, erhöhten Temperatur ausgesetzt werden. Insbesondere sind beide der Speichermaterialien geeignet, unter ähnlichen oder gleichen Betriebsbedingungen Wasserstoff durch Hydridbildung zu speichern und reversibel wieder abzugeben.

Insbesondere sind beide Speichermaterialien geeignet, in einem Druckbereich zwischen 0,1 MPa und einem baulich und/oder sicherheitstechnisch bedingten Maximaldruck des Wasserstoffspeicherbehälters und/oder unterhalb einer baulich und/oder sicherheitstechnisch bedingten Maximaltemperatur des Wasserstoffspeicherbehälters Wasserstoff durch Hydrierung zu speichern. Insbesondere unterscheiden sich die jeweiligen Speicherkapazitäten der beiden Materialien unter gleichen Betriebsbedingungen nach einer Aktivierung um maximal 70 %, insbesondere um maximal 40 %, insbesondere um maximal 20 %.

Unter einer "Aktivierungsgeschwindigkeit" (oder auch "Sorptionskinetik") eines Wasserstoffspeichermaterials kann eine Größe verstanden werden, die beschreibt, in welcher Zeit sich die tatsächliche Wassertoffspeicherkapazität des Speichermaterials an dessen theoretische Speicherkapazität annähert und insbesondere einen Wert von zumindest 80 % erreicht und Werte bis zu mehr als 90 % erreichen kann. Insbesondere ist die Aktivierungsgeschwindigkeit eine Größe der Zeit und/oder eine Größe der Anzahl durchgeführter Aktivierungszyklen, die bis zum Erreichen der jeweiligen erreichbaren maximalen Speicherkapazität erforderlich ist bzw. sind. Ein Aktivierungszyklus erfordert beispielsweise die Einhaltung eine Wasserstoffhochdruckphase, bei der Wasserstoff in das Speichermaterial eingelagert wird, und eine sich anschließende Wasserstoffniederdruckphase, bei der durch Verringerung des Druckes im Hohlkörper Wasserstoff aus dem Speichermaterial freigesetzt wird. Beim Vergleich der Aktivierungsgeschwindigkeit zweier Materialien wird davon ausgegangen, dass die Aktivierung beider Materialien bei gleichen oder zumindest ähnlichen Bedingungen durchgeführt wird. Die Aktivierungsgeschwindigkeit kann zum Beispiel gravimetrisch oder volumetrisch bestimmt werden.

Unter einem "Hohlkörper" soll beispielsweise ein Körper verstanden werden, der einen inneren Hohlraum bildet. Insbesondere weist der Hohlkörper zumindest eine Wand auf, die den Hohlraum umschließt. Insbesondere ist der Hohlkörper zur Aufnahme und Lagerung/Speicherung einer Wasserstoffatmosphäre geeignet. Die Wand sollte technisch dicht für Wasserstoff sein. Der Hohlkörper sollte dabei einer Druckdifferenz (Innendruck minus Außendruck) von zumindest 0,05 MPa standhalten. Der Hohlkörper kann ein formstabiler Tank sein. Die Wand kann aus einem Metall oder einer Metalllegierung, z.B. Edelstahl 316 L oder 316 Ti oder Aluminium, mit einer Wandstärke von zumindest 0,5 mm gebildet sein. Alternativ ist es denkbar, dass der Druckbehälter aus einem flexiblen Material gebildet ist und beispielsweise einen Beutel bildet, der eine volumetrische Anpassung des Behälters an eine Ausdehnung des Speichermaterials erlaubt. Insbesondere weist der Hohlkörper zumindest eine Öffnung auf, durch die der Hohlkörper mit gasförmigem Wasserstoff befüllt werden kann. Eine Entnahme von Wasserstoff kann über diese Öffnung durchgeführt werden oder es kann eine weitere Öffnung dafür vorgesehen sein.

Der Wasserstoffspeicherbehälter sollte zumindest eine Ein- und-Auslasseinheit aufweisen, die die Öffnungen des Hohlkörpers verschließt. Eine Ein- und Auslasseinheit kann zumindest ein Ventil aufweisen. Der Wasserstoffspeicherbehälter sollte mindestens ein Überdrucksicherheitsventil aufweisen.

Gemäß einer weiteren Ausgestaltung weist zumindest das zweite, insbesondere das erste und das zweite, hydrierbare Wasserstoffspeichermaterial bei Hydrierung eine Volumenausdehnung (Volumenzunahme) von zumindest 10 % gegenüber einem zumindest im Wesentlichen unhydrierten Zustand auf. Hierdurch kann beispielsweise eine schnellere Aktivierung des Systems der beiden Speichermaterialen und somit des gesamten Wasserstoffspeicherbehälters erreicht werden. So können sich mechanische Spannungen des zweiten Speichermaterials, die durch Hydrierung und Ausdehnung des Speichermaterials hervorgerufen werden, auf das erste Speichermaterial übertragen werden, wodurch Ablösungen von Verunreinigungen/Kontaminationen beschleunigt werden.

Insbesondere besteht eine lose Berührung zwischen den unterschiedlichen Wasserstoffspeichermaterialien. Somit kann eine volumetrische Ausdehnung des in kürzerer Zeit aktivierbaren zweiten Wasserstoffspeichermaterials zu lokalen mechanischen Spannungen führen, die durch die räumliche Nähe zum langsamen ersten Wasserstoffspeichermaterial auf dieses übertragen werden, so dass Verunreinigungen oder Oxydschichten im/vom langsameren ersten Wasserstoffspeichermaterial durch die mechanischen Spannungen schneller und sicherer aufgebrochen bzw. durch direkten Kontakt von Wasserstoff durchdrungen werden können.

Weiterhin kann das schneller hydrierende zweite Wasserstoffspeichermaterial aktivierten Wasserstoff (in statu nascendi) an das benachbarte langsamer hydrierende Wasserstoffspeichermaterial abgeben, um wieder neuen Wasserstoff aus der Umgebungsatmosphäre innerhalb des Hohlkörpers zu beziehen.

Die Partikelform des ersten und zweiten Speichermaterials kann sphärisch, spratzig, nadel- oder plättchenförmig sein. Das erste und zweite Wasserstoffspeichermaterial können jeweils auch eine Mischung von mehreren Materialien sein. Weiterhin kann in dem Hohlraum ein weiteres Material, beispielsweise als Pulver oder in stückiger Form vorhanden sein, das keine oder lediglich geringfügige Wasserstoffspeicherkapazität aufweist und beispielsweise einer Kontaktvermittlung zwischen den zwei unterschiedlichen Speichermaterialien dient.

Gemäß einer weiteren Ausgestaltung ist zumindest ein Großteil des ersten hydierbaren Wasserstoffspeichermaterials in räumlicher Nähe zum zweiten hydrierbaren Wasserstoffspeichermaterial angeordnet. Insbesondere sind alle im Hohlraum angeordneten Speichermaterialen in räumlicher Nähe zum zweiten hydrierbaren Wasserstoffspeichermaterial angeordnet.

Hierdurch kann beispielsweise erreicht werden, dass sich mechanische Spannungen des zweiten Materials gut auf das erste Material übertragen.

Unter einem "Großteil des ersten Speichermaterials" sollen beispielsweise zumindest 70 Vol.-%, insbesondere zumindest 90 Vol.-%, insbesondere zumindest 95 Vol.-% verstanden werden. Darunter, dass ein Großteil des ersten Speichermaterials "in räumlicher Nähe" zum zweiten Speichermaterial angeordnet ist, kann beispielsweise verstanden werden, dass ein Abstand zwischen beliebigen Bereichen des Großteils des ersten Speichermaterials zu einem nächstliegenden Bereich des zweiten Speichermaterials kleiner ist als 20 mm, insbesondere kleiner ist als 10 mm, insbesondere kleiner ist als 5 mm. Insbesondere stehen das erste und zweite Speichermaterial in direktem oder indirektem, also über weitere Stoffe übertragenen, mechanischem berührenden Kontakt, so dass sich mechanische Spannungen vom einen Speichermaterial auf das andere Speichermaterial ausbreiten können.

Es kann zumindest ein gegenüber Wasserstoff inertes Material, beispielsweise Graphit, Binder, und/oder Aluminiumpulver, zwischen den zwei Speichermaterialien angeordnet sein, das einen mechanischen berührenden Kontakt zwischen den Speichermaterialien herstellt. Die zumindest zwei Speichermaterialen und das inerte Material können ein Verbundmaterial oder einen Werkstoffverbund bilden.

Beide Speichermaterialien können eine Pulverschüttung bilden. Die Speichermaterialien können als Pulvermischung vorliegen, bei der die Wasserstoffspeichermaterialien bevorzugt homogen vermischt sind. Insbesondere weisen die Partikel pulverförmiger Speichermaterialien eine mittlere Partikelgröße von zumindest 0,1 µm, insbesondere von zumindest 50 µm, Partikel der Speichermaterialien sollten eine Größe von maximal 15 mm, vorzugsweise maximal 1 mm aufweisen. Die mittlere Partikelgröße des ersten Speichermaterials sollte bei gleicher Partikelform nicht mehr als 50 % von einer (mittleren) Partikelgröße des zweiten Speichermaterials abweichen. Alternativ können die Partikel des zweiten Speichermaterials eine mittlere Partikelgröße aufweisen, die maximal 1 % einer Partikelgröße des ersten Speichermaterials entspricht.

Pulverförmiges Wasserstoffspeichermaterial sollte im Hohlraum verdichtet worden sein. Dies kann auch nach dem Befüllen des Hohlraums mit einem Gemisch aus erstem und zweitem Speichermaterial beispielsweise durch Vibration und/oder ein Verpressen erreicht werden. Dadurch kann der Abstand von Partikeln der unterschiedlichen Speichermaterialien und ggf. Zweitphasen (Binder, Graphit) im Pulvergemisch verringert werden.

Gemäß alternativen Ausgestaltungen kann die Pulvermischung vor dem Befüllen des Hohlraums verdichtet werden.

Die Speichermaterialien können als Verbundwerkstoff, beispielsweise in Tablettenform oder kuchenstückförmig, ausgebildet sein. Diese Art von Speichermaterialien können als Werkstoffverbund oder als Schichtaufbau aus mit aufeinanderfolgenden alternierend angeordneten Schichten oder Körpern der zwei Wasserstoffspeichermaterialien ausgebildet sein.

Alternativ ist es denkbar, dass die Partikel/Körper der Speichermaterialien lediglich und/oder im Wesentlichen über die Wasserstoffatmosphäre in Verbindung stehen. Die beiden unterschiedlichen Wasserstoffspeichermaterialien müssen sich nicht zwingend unmittelbar berühren. Das schneller aktivierbare zweite Speichermaterial kann mit der umgebenden Wasserstoffatmosphäre im Gleichgewicht stehen und bis zur Sättigung ständig Wasserstoff (molekular als auch atomar) an das erste Speichermaterial abgeben und dabei neuen Wasserstoff aus der Umgebungsatmosphäre im Hohlkörpert aufnehmen (lokales Gleichgewicht). Der vom zweiten Speichermaterial abgegebene Wasserstoff weist höchste Reinheit auf und kann reaktionsfreudig (aktiviert, in statu nascendi) sein, so dass er aufgrund dessen erleichtert vom ersten Speichermaterial aufgenommen werden kann.

Gemäß einer weiteren Ausgestaltung weist das zweite hydrierbare Wasserstoffspeichermaterial einen Anteil von maximal 50 Masse-%, insbesondere maximal 20 Masse-%, bevorzugt maximal 10 Masse-%, besonders bevorzugt 5 Masse-% und ganz besonders bevorzugt maximal 2 Masse-% der im Hohlraum angeordneten hydrierbaren Wasserstoffspeichermaterialien in Bezug zum ersten Wasserstoffspeichermaterial auf.

Hierdurch kann beispielsweise eine Kostenersparnis gegenüber einer Ausgestaltung erreicht werden, bei der zum Großteil das zweite Speichermaterial Verwendung findet.

Gemäß einer weiteren Ausgestaltung sind die hydrierbaren Wasserstoffspeichermaterialien zumindest im Wesentlichen frei von Edelmetallen, insbesondere sind weder Palladium, Platin, Gold, Silber, Iridium, Ruthenium, Rhodium und/oder Osmium enthalten. Die Wasserstoffspeichermaterialien sollten weniger als 100 ppm, vorteilhaft weniger als 10 ppm, besonders vorteilhaft weniger als 1 ppm Edelmetalle enthalten oder vollständig frei von Edelmetallen sein.

Hierdurch können beispielsweise geringe Herstellungskosten erreicht werden.

Gemäß einer weiteren Ausgestaltung sind die hydrierbaren Wasserstoffspeichermaterialien zumindest im Wesentlichen frei von Alkalimetallen. Insbesondere Lithium, Natrium, Kalium, Rubidium und/oder Cäsium sollten nicht vorhanden sein. Die Wasserstoffspeichermaterialien sollten weniger als 100 ppm, vorteilhaft weniger als 10 ppm, besonders vorteilhaft weniger als 1 ppm Alkalimetalle aufweisen oder vollständig frei von Alkalimetallen sein.

Hierdurch können beispielsweise geringe Herstellungskosten und/oder eine hohe Umweltverträglichkeit erreicht werden.

Darunter, dass ein Speichermaterial "zumindest im Wesentlichen frei" ist von Edel- oder Alkalimetallen, kann beispielsweise verstanden werden, dass diese zu maximal 1 molaren Prozent, beispielsweise maximal 0,2 molare Prozent, beispielsweise maximal 0,02 molare Prozent in dem Speichermaterial vertreten ist. Insbesondere ist das Speichermaterial bis auf unbeabsichtigte Verunreinigungen vollständig frei von Edel- bzw. Alkalimetallen.

Gemäß einer weiteren Ausgestaltung ist das erste hydrierbare Wasserstoffspeichermaterial zumindest im Wesentlichen eine Fe-Ti-Legierung oder eine Fe-Ti-X- basierte Metalllegierung und/oder das zweite hydrierbare Wasserstoffspeichermaterial ist zumindest im Wesentlichen eine Ti-Mn- oder La-Ni-Legierung oder eine Ti-Mn-A-, La-Ni- oder La-Ni-A- basierte Übergangsmetalllegierung . Hierbei kann X ausgewählt sein aus mindestens einem der chemischen Elemente V, Cr, Mn, Ni, Al, Mo und Cu und A kann ausgewählt sein aus mindestens einem der chemischen Elemente Co, Cu, Al, Mo, Zr, V, Cr, Mn, Ce, Pr, Nd, Sm, Eu, Gd, Tb, Dy, Ho, Er, Tm, Yb und Lu.

Hierdurch kann eine hohe Wasserstoffspeicherkapazität und schnelle Aktivierung erreicht werden.

Darunter, dass ein Speichermaterial "zumindest im Wesentlichen aus" einem bestimmten Material besteht, kann beispielsweise verstanden werden, dass zumindest 80 Masse-%, insbesondere zumindest 90 Masse-%, bevorzugt zumindest 95 Masse-%, besonders bevorzugt zumindest 98 Masse-% des Speichermaterials von dem bestimmten Material gebildet sind. Die Speichermaterialien sollten jedoch bis auf (unbeabsichtigte) Verunreinigungen ausschließlich aus dem bestimmten Material gebildet sein.

Es besteht aber auch die Möglichkeit, dass das erste hydrierbare Wasserstoffspeichermaterial zumindest im Wesentlichen die gleiche Zusammensetzung aufweist, wie das zweite Wasserstoffspeichermaterial. Beide Wasserstoffspeichermaterialien sollten sich dabei durch das jeweilige Herstellungsverfahren, die jeweilige Kristallitgröße und/oder die Partikelform/-größe unterscheiden. Es können aber jeweils allein oder zusätzlich etwas jeweils andere Anteile der ansonsten gleichen chemischen Elemente enthalten sein.

So könnte man bei der Herstellung des ersten Speichermaterials so vorgehen, dass beispielsweise durch einen Verdüsungsprozess sphärische Partikel entstehen oder durch ein Schmelzschleuderverfahren plättchenförmige Partikel mit einer ersten Aktivierungsgeschwindigeit gebildet werden. Bei der Herstellung des zweiten Speichermaterials könnten durch einen Mahlprozess spratzige Pulver mit einer zweiten Aktivierungsgeschwindigkeit erhalten werden. Die Kristallitgröße sollte sich dadurch unterscheiden, dass Rascherstarrungsprozesse (z.B. Verdüsung, Schmelzschleudern) Größen von wenigen Nanometern, insbesondere mehreren 10 nm erzeugen und, dass zum Beispiel aus einem gegossenen Block gebrochene und gemahlene Partikel zumindest Kristallitgrößen von 20 nm, insbesondere zumindest Kristallitgrößen von 100 nm und vorzugsweise 300 nm aufweisen.

Gemäß einer weiteren Ausgestaltung sollte die Aktivierungsgeschwindigkeit des zweiten hydrierbaren Wasserstoffspeichermaterials zumindest doppelt, insbesondere zumindest dreimal, bevorzugt zumindest viermal, besonders bevorzugt zumindest fünfmal so hoch, wie die des ersten hydrierbaren Wasserstoffspeichermaterials sein. Beispielsweise erfordert das erste Wasserstoffspeichermaterial zumindest ein Doppeltes, insbesondere zumindest ein Dreifaches, insbesondere zumindest ein Vierfaches, insbesondere zumindest ein Fünffaches, an Zeit zur Aktivierung als das zweite Wasserstoffspeichermaterial und oder insbesondere benötigt das erste Material zumindest eine doppelte, insbesondere zumindest eine dreifache, zumindest eine vierfache oder zumindest eine fünffache, Zahl an Aktivierungszyklen als das zweite Wasserstoffspeichermaterial.

Es kann beispielsweise eine schnelle Aktivierung des gesamten im Hohlkörper enthaltenen Wasserstoffspeichermaterials erreicht werden.

Aufgrund der erfindungsgemäßen Ausgestaltung ist es möglich, die Aktivierung bei Einhaltung kleiner Drücke im Vergleich zu herkömmlichen technischen Lösungen durchzuführen. Entsprechend kann der Hohlkörper ausgelegt sein, einem Druck, insbesondere einer Druckdifferenz von Innendruck im Hohlkörper minus Außendruck, von maximal 90 MPa, insbesondere maximal 20 MPa, vorteilhaft maximal 10 MPa im Hohlraum stand zu halten. Die Wand des Hohlkörpers sollte eine Wandstärke von maximal 15 mm, insbesondere maximal 4 mm, vorteilhaft maximal 1 mm, aufweisen.

Es kann eine kostengünstige und/oder materialsparende Ausgestaltung erreicht werden.

Weiterhin wird ein Verfahren zur Herstellung und/oder Aktivierung eines erfindungsgemäßen Wasserstoffspeicherbehälters vorgeschlagen, wobei der Hohlraum bei einer vorgegebenen Temperatur, insbesondere einer Temperatur im Bereich zwischen 0°C und 200 C, vorteilhaft im Bereich zwischen 10 C und 90 C, oder bei normaler Raumtemperatur einer (Hochdruck-) Wasserstoffatmosphäre mit wiederholt verändertem Druck, insbesondere zwischen 0,001 MPa und 15 MPa, bevorzugt zwischen 0,1 MPa und 5 MPa, ausgesetzt wird. Insbesondere wird der Druck der Wasserstoffatmosphäre zyklisch abwechselnd bei 0,15 MPa und 4 MPa gehalten. Dieser Zyklus sollte maximal 20 mal, insbesondere maximal 15 mal, bevorzugt maximal 10 mal und mindestens 1 mal wiederholt werden. Der Hohlraum mit den darin angeordneten Speichermaterialien kann anschließend unter erhöhter Temperatur, insbesondere maximal 100 °C, insbesondere maximal 80 °C, bevorzugt maximal 70°C einer Hochdruckwasserstoffatmosphäre mit wiederholt schwankendem Druck ausgesetzt werden, um die Bewertung der Speicherkapazität bei anwendungsnahen Bedingungen nach der Aktivierungsprozedur zu testen. Der Druck der Wasserstoffatmosphäre kann dabei zyklisch abwechselnd bei 0,15 MPa und 4 MPa gehalten werden. Dieser zweite Zyklus kann maximal 20 mal, maximal 15 mal oder insbesondere maximal 10 mal wiederholt werden.

Beispielsweise kann das zweite Speichermaterial nach einer Aktivierung des ersten Speichermaterials, insbesondere unter einer Schutzatmosphäre aus Wasserstoff aus dem Wasserstoffspeicherbehälter entfernt werden, um es in einem weiteren Aktivierungsprozess, z.B. in einem weiteren Wasserstoffspeicherbehälters, erneut verwenden zu können. Beispielsweise kann das zweite Speichermaterial hierbei als Folie oder Platte ausgebildet oder zum Beispiel in Pulverform, auf eine Trägerplatte oder Trägerfolie aufgetragen und an dieser fixiert sein, wobei das erste Speichermaterial zur Aktivierung, beispielsweise in Pulverform, zwischen den Platten oder Folien angeordnet werden kann.

Ausführungsbeispiele sind in der Zeichnung dargestellt und werden in der nachfolgenden Beschreibung näher erläutert. Es zeigen:
- Fig. 1: eine schematische Darstellung eines erfindungsgemäßen Wasserstoffspeicherbehälters,
- Fig. 2: ein Aktivierungsdiagramm (25°C, 4 MPa / 0.15 MPa) eines Wasserstoffspeicherbehälters mit einer Fe-Ti-basierten Legierung als Speichermaterial,
- Fig. 3: ein Aktivierungsdiagramm (25°C, 4 MPa / 0.15 MPa) eines Wasserstoffspeicherbehälters mit einer Ti-Mn-basierten Legierung als Speichermaterial und
- Fig. 4: Aktivierungsdiagramm (25°C, 4 MPa / 0.15 MPa) für erfindungsgemäße Wasserstoffspeicherbehälter mit unterschiedlichen Mischungen aus FeTi-basierter Legierung und Ti-Mn-basierter Legierung bis t=900 min. Ab t=901 min wird eine anwendungsnahe Be- und Entladung der Speichermaterialien gezeigt.

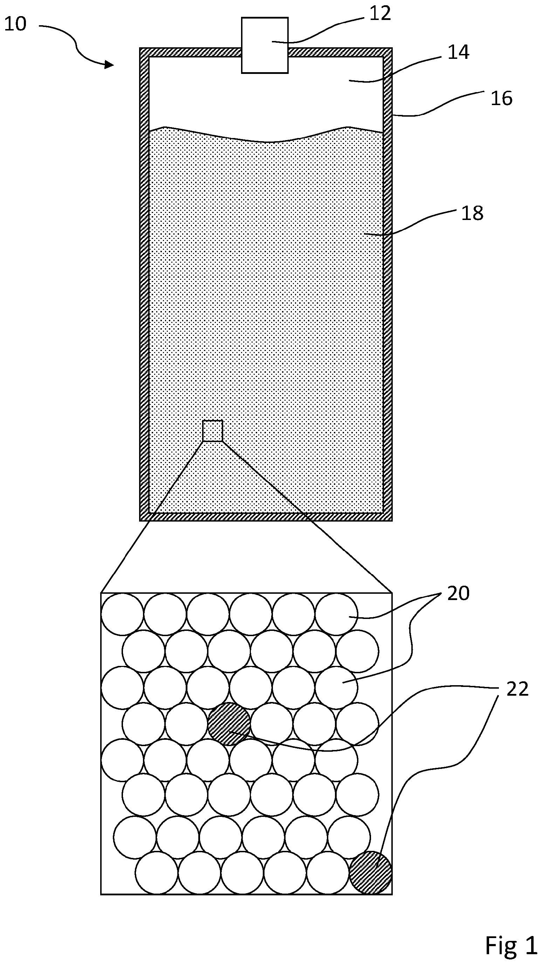

Figur 1 zeigt einen Wasserstoffspeicherbehälter 10 mit einem, einen Hohlraum 14 bildendenden Hohlkörper 16. Der Hohlraum 14 ist teilweise mit einer Pulverschüttung 18 gefüllt. Weiterhin weist der Wasserstoffspeicherbehälter 10 eine Ein-und-Auslasseinheit 12 auf, die dazu geeignet ist, eine Verbindung zwischen dem Hohlraum 14 und einer Umgebung zu schaffen. Die Ein-und-Auslasseinheit 12 ist vorgesehen, um den Wasserstoffspeicherbehälter 10 mit Wasserstoff zu befüllen oder ihm Wasserstoff zu entnehmen. Die Ein-und-Auslasseinheit 12 ist als eine mit einem Ventil versehene Öffnung ausgestaltet. Es sind weitere Ausgestaltungen denkbar, gemäß denen jeweils unterschiedliche mit Ventilen versehene Öffnungen für das Befüllen und Entnehmen vorgesehen sind.

Die Pulverschüttung 18 ist eine Mischung aus Partikeln 20 eines ersten hydrierbaren Wasserstoffspeichermaterials (ohne Schraffur) und Partikeln 22 eines zweiten hydrierbaren Wasserstoffspeichermaterials (mit Schraffur). Die Pulverschüttung 18 ist in dem Hohlkörper 16 verdichtet.

Das erste Speichermaterial ist eine Eisen-Titan (Fe-Ti) basierte Legierung. Das zweite Speichermaterial ist eine Titan-Mangan (Ti-Mn) basierte Legierung.

Als erstes Wasserstoffspeichermaterial kann man beispielsweise Fe_{0.9}TiMn_{0,1} einsetzen.

Das erste Speichermaterial ist frei von Edelmetallen. Das zweite Speichermaterial ist frei von Edelmetallen. Das erste Speichermaterial ist frei von Alkalimetallen. Das zweite Speichermaterial ist frei von Alkalimetallen.

Als zweites Speichermaterial kann man beispielsweise Ti_{0.8}Zr_{0.3}Mn_{1.4}Mo_{0.1}V_{0.2}Cr_{0.2} einsetzen.

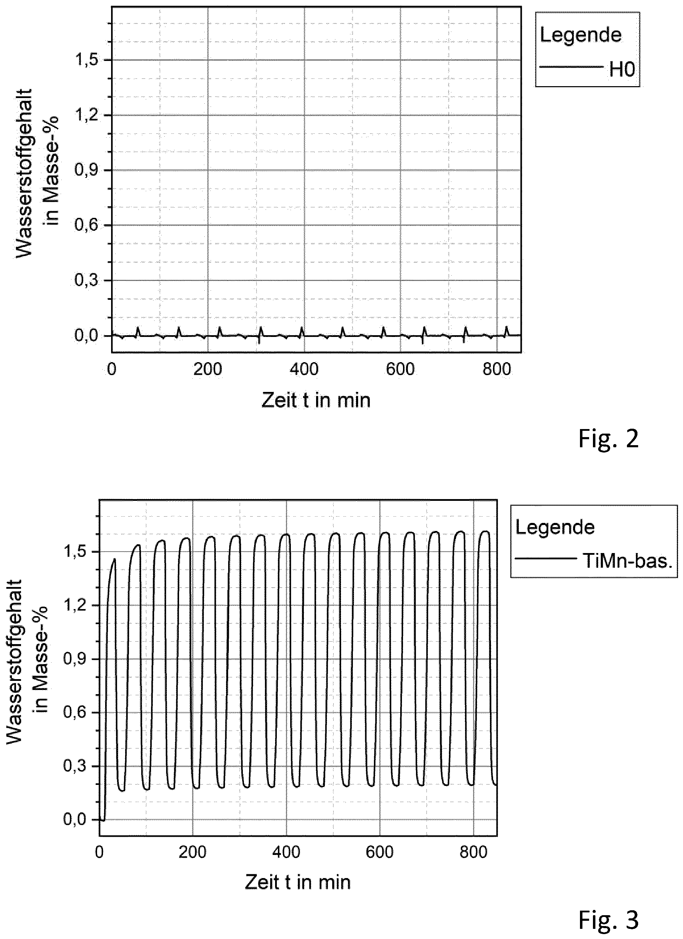

Das erste Speichermaterial weist eine erste Aktivierungsgeschwindigkeit von etwa "0" bei 25°C auf (vgl. Figur 2). Es erfolgt keine signifikante Wasserstoffaufnahme in einer Zeit von etwa 800 Minuten bzw. 10 Zyklen mit Druckwechseln zwischen 4 MPa und 0.15 MPa. Das zweite Speichermaterial weist eine zweite Aktivierungsgeschwindigkeit bei gleichen Bedingungen auf, die höher ist als die des ersten Speichermaterials (vgl. Figur 3). Eine Speicherkapazität von 80 % der maximalen Speicherkapazität (in diesem Fall etwa 1,2 Masse-Prozent) wird bereits nach einem Aktivierungszyklus bzw. einer Zeit t von etwa 20 Minuten erreicht. Eine Aktivierungsgeschwindigkeit des zweiten Speichermaterials ist also viel höher, als die des ersten Speichermaterials.

Das zweite Speichermaterial erfährt bei Hydrierung eine Volumenausdehnung von etwa 25 % gegenüber einem unhydrierten Zustand. Das erste Speichermaterial erfährt bei Hydrierung eine Volumenausdehnung von etwa 12 % gegenüber einem unhydrierten Zustand. Damit der Hohlkörper 16 durch diese Ausdehnung nicht beschädigt wird, wird bei der Befüllung des Hohlkörpers 16 mit der Pulverschüttung 18 ein Freiraum gelassen, in den sich die Pulverschüttung 18 hinein ausdehnen kann.

Partikel 20, 22 des ersten und zweiten Speichermaterials weisen jeweils mittlere Partikelgrößen zwischen 0,5 um und 15 mm, alternativ zwischen 5 um und 1 mm auf. Durch die Mischung der Partikel 20, 22 der beiden Speichermaterialien, sind Partikel 20 des ersten Speichermaterials in räumlicher Nähe zu Partikeln 22 des zweiten Speichermaterials angeordnet. Partikel 20 des ersten Speichermaterials sind maximal 5 mm von Partikeln 22 des zweiten Speichermaterials entfernt angeordnet.

Partikel 22 des zweiten Speichermaterials machen etwa 1 Masse-% der im Hohlraum 14 vorhandenen Speichermaterialien aus. Die übrigen 99 % sind von Partikeln 20 des ersten Speichermaterials gebildet.

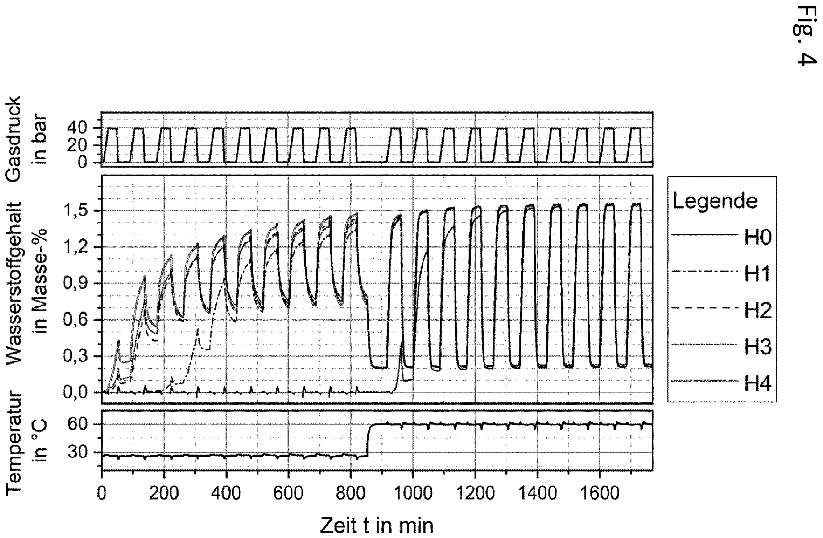

Da eine Aktivierung des langsameren ersten Speichermaterials mittels des schnelleren zweiten Speichermaterials beschleunigt abläuft, kann auf den Einsatz hoher Drücke und Temperaturen bei der Aktivierung des ersten Speichermaterials verzichtet werden (vgl. Figur 4).

Der Hohlkörper 16 und insbesondere die Wandstärke des Hohlkörpers 16 und die Ein-und-Auslassvorrichtung sind ausgelegt einem Druck von bis zu 5 MPa stand zu halten. Der Hohlkörper weist eine Wandstärke von 1,5 mm auf. Der Hohlkörper 16 und insbesondere die Wandstärke des Hohlkörpers 16 und die Ein-und-Auslassvorrichtung sind ausgelegt einer Temperatur von bis zu 100 °C stand zu halten. Je nach Anwendungsanforderung sind andere auch höhere Grenzwerte möglich.

Figur 2 zeigt ein Aktivierungsdiagramm für die verwendete Fe-Ti-basierte Legierung als ein erstes Wasserstoffspeichermaterial, wenn diese ohne den Zusatz der Ti-Mn-basierten Legierung als ein zweites Wasserstoffspeichermaterial verwendet wird. Im Diagramm ist die gespeicherte Menge Wasserstoff H je Stoffmenge der Fe-Ti-Legierung in Abhängigkeit der Zeit t dargestellt. Die Fe-Ti-Legierung wurde hierbei zehn Aktivierungszyklen unterworfen. Jeder Aktivierungszyklus besteht aus einer Hockdruckphase bei der Wasserstoff mit einem Druck von etwa 4 MPa dem Wasserstoffspeicherbehälter 10 zugeführt wird und einer anschließenden Niederdruckphase bei der Wasserstoff dem Wasserstoffspeicherbehälter 10 bei einem Druck von etwa 0,15 MPa entnommen wird. Die Hochdruckphase wird dabei mit einem kontinuierlichen Druckanstieg begonnen der etwa 18 Minuten andauert. Die Hochdruckphasenzeitdauer beträgt insgesamt etwa 48 Minuten und die Niederdruckphasenzeitdauer beträgt 37 Minuten. Die Aktivierung wurde bei Raumtemperatur (25°C) durchgeführt. Es erfolgte keine Wasserstoffaufnahme. Am Ende des zehnten Aktivierungszyklus, nach etwa 800 Minuten, erreicht die Fe-Ti-Legierung eine Speicherkapazität von 0 Masse-Prozent.

Figur 3 zeigt ein Aktivierungsdiagramm für eine Ti-Mn-basierte Legierung als ein zweites Wasserstoffspeichermaterial, wenn diese ohne die Fe-Ti-basierte Legierung als erstes Wasserstoffspeichermaterial verwendet wird. Im Diagramm ist die gespeicherte Menge Wasserstoff H je Stoffmenge der Ti-Mn-Legierung in Abhängigkeit der Zeit t dargestellt. Die Ti-Mn-Legierung wurde hierbei zehn Aktivierungszyklen unterworfen. Jeder Aktivierungszyklus besteht aus einer Hockdruckphase bei der Wasserstoff mit einem Druck von etwa 4 MPa dem Wasserstoffspeicherbehälter 10 zugeführt wird und einer anschließenden Niederdruckphase bei der Wasserstoff dem Wasserstoffspeicherbehälter 10 bei einem Druck von etwa 0,15 MPa entnommen wird. Die Hochdruckphase wird hierbei mit einem kontinuierlichen Druckanstieg begonnen. Die Hochdruckphasenzeitdauern betragen insgesamt etwa 20 Minuten und die Niederdruckphasenzeitdauer etwa 20 Minuten. Die Aktivierung wurde bei Raumtemperatur (25°C) durchgeführt. Am Ende des achten Aktivierungszyklus, nach etwa 400 Minuten, erreicht die Ti-Mn-Legierung eine Speicherkapazität von über 1,6 Masse-%. Die Speicherkapazität ist nun durch weitere Aktivierungszyklen nur noch geringfügig zu verbessern.

Figur 4 zeigt Aktivierungsdiagramme für unterschiedliche Beimengungen (H0 bis H4) des zweiten Speichermaterials (Ti-Mn-basierte Legierung) zum ersten Speichermaterial (Fe-Ti-basierte Legierung). In einem oberen Diagramm ist der Druck p der Wasserstoffatmosphäre im Wasserstoffspeicherbehälter dargestellt. Im unteren Diagramm ist eine Temperatur des Wasserstoffspeicherbehälters dargestellt. Im mittleren Diagramm sind die Wasserstoffmengen je Stoffmenge der Kombinationen von Speichermaterialien in Form von Aktivierungslinien H0, H1, H2, H3, H4 angegeben. Nach einer Aktivierungszeit von t=900 min folgt dem Aktivierungsdiagramm dann ein Zyklierungsdiagramm unter anwendungsnahen Bedingungen der Wasserstoffspeichmaterialien. Es zeigt die hochdynamische Be- und Entladung der Materialien nach der sehr erfolgreichen und schnellen Aktivierung bei Raumtemperatur durch die Kombination der Materialien (H1-H3).

Zum Vergleich ist die Aktivierungslinie H0 für die alleinige Verwendung der Fe-Ti-basierten Legierung angegeben. Weiterhin gibt eine Aktivierungslinie H1 den Verlauf für eine Mischung aus 1 Masse-% der Ti-Mn-Legierung mit 99 Masse-% der Fe-Ti-Legierung an. Die Aktivierungslinie H2 gibt den Verlauf für eine Mischung aus 3 Masse-% der Ti-Mn-Legierung mit 97 Masse-% der Fe-Ti-Legierung an und die Aktivierungslinie H3 gibt den Verlauf für eine Mischung aus 5 Masse-Prozent der Ti-Mn-Legierung mit 95 Masse-% der Fe-Ti-Legierung an. Die letzte Aktivierungslinie H4 gibt den Verlauf der Aktivierung für eine Mischung aus 10 Masse-% der Ti-Mn-Legierung mit 90 Masse-% der Fe-Ti-Legierung an.

Bei einer Aktivierung des Wasserstoffspeicherbehälters 10 wird der Hohlraum 14 unter Normaltemperatur einer Hochdruckwasserstoffatmosphäre mit wiederholt verändertem Druck, mit jeweils Hoch- und Niederdruckphasen ausgesetzt. Die Fe-Ti-basierte Legierung wurde hierbei zuerst zehn Aktivierungszyklen unter Normaltemperatur und anschließend zehn anwendungsnahen Zyklen unter leicht erhöhter Temperatur von 60 °C unterworfen. Jeder Zyklus besteht hierbei aus einer Hockdruckphase bei der Wasserstoff mit einem Druck von etwa 4 MPa dem Wasserstoffspeicherbehälter 10 zugeführt wird und einer anschließenden Niederdruckphase bei der Wasserstoff dem Wasserstoffspeicherbehälter 10 unter einem Druck von etwa 0,15 MPa entnommen wird. Die Hochdruckphase wird hierbei mit einem kontinuierlichen Druckanstieg begonnen, der etwa 18 Minuten andauert. Die Hochdruckphasen dauern insgesamt etwa 48 Minuten an und die Niederdruckphasen insgesamt 37 Minuten. An der Aktivierungslinie H1 der Mischung mit 1 Masse-Prozent Ti-Mn ist bereits eine deutlich erhöhte Aktivierungsgeschwindigkeit im Vergleich zur Aktivierungslinie H0 der reinen Verwendung des ersten Speichermaterials zu erkennen. Nach bereits sechs Aktivierungszyklen kann eine Wasserstoffmenge gespeichert werden, die ohne Zugabe des zweiten Speichermaterials erst nach zehn Zyklen erreicht wird.

Bei einer Herstellung des Wasserstoffspeicherbehälters 10 werden das erste und zweite Speichermaterial getrennt voneinander vermahlen und anschließend vermischt. Anschließend wird die Pulverschüttung 18 in dem Hohlkörper 16 verdichtet.

## Patentansprüche

1. Wasserstoffspeicherbehälter mit zumindest einem, einen Hohlraum (14) bildendenden Hohlkörper (16) und zumindest einem ersten hydrierbaren Wasserstoffspeichermaterial, das in dem Hohlraum (16) angeordnet ist und das bei einer Aktivierung durch Wasserstoff eine erste Aktivierungsgeschwindigkeit aufweist, **dadurch gekennzeichnet, dass** in dem Hohlraum (16) ein zweites hydrierbares Wasserstoffspeichermaterial angeordnet ist, das bei Aktivierung durch Wasserstoff eine zweite Aktivierungsgeschwindigkeit aufweist, die höher ist als die des ersten hydrierbaren Wasserstoffspeichermaterials.

2. Wasserstoffspeicherbehälter gemäß Anspruch 1, **dadurch gekennzeichnet, dass** zumindest das zweite hydrierbare Wasserstoffspeichermaterial bei Hydrierung eine Volumenausdehnung von zumindest 10 % gegenüber einem zumindest im Wesentlichen unhydrierten Zustand erfährt.

3. Wasserstoffspeicherbehälter gemäß einem der Ansprüche 1 bis 2, **dadurch gekennzeichnet, dass** zumindest ein Großteil des ersten hydierbaren Wasserstoffspeichermaterials in räumlicher Nähe zum zweiten hydrierbaren Wasserstoffspeichermaterial angeordnet ist.

4. Wasserstoffspeicherbehälter gemäß Anspruch 3, **dadurch gekennzeichnet, dass** zumindest ein Großteil des ersten hydierbaren Wasserstoffspeichermaterials in einem Abstand von maximal 15 mm zum zweiten hydrierbaren Wasserstoffspeichermaterial angeordnet ist.

5. Wasserstoffspeicherbehälter gemäß einem der Ansprüche 1 bis 4, **dadurch gekennzeichnet, dass** pulverförmiges Wasserstoffspeichermaterial im Hohlraum (16) verdichtet ist.

6. Wasserstoffspeicherbehälter gemäß einem der Ansprüche 1 bis 5, **dadurch gekennzeichnet, dass** das zweite hydrierbare Wasserstoffspeichermaterial maximal 50 Masse-Prozent der im Hohlraum (14) angeordneten hydrierbaren Wasserstoffspeichermaterialien ausmacht.

7. Wasserstoffspeicherbehälter gemäß einem der Ansprüche 1 bis 6, **dadurch gekennzeichnet, dass** die hydrierbaren Wasserstoffspeichermaterialien zumindest im Wesentlichen frei sind von Edelmetallen und/oder Alkalimetallen.

8. Wasserstoffspeicherbehälter gemäß einem der Ansprüche 1 bis 7, **dadurch gekennzeichnet, dass** die Aktivierungsgeschwindigkeit des zweiten hydrierbaren Wasserstoffspeichermaterials zumindest zweimal so groß ist, wie die des ersten hydrierbaren Wasserstoffspeichermaterials.

9. Wasserstoffspeicherbehälter gemäß einem der Ansprüchen 1 bis 8, **dadurch gekennzeichnet, dass** das erste hydrierbare Wasserstoffspeichermaterial zumindest im Wesentlichen eine Fe-Ti-Legierung oder eine Fe-Ti-X- basierte Metalllegierung ist, wobei X ausgewählt ist aus mindestens einem der chemischen Elemente V, Cr, Mn, Co, Ni, Al, Mo und Cu und/oder das zweite hydrierbare Wasserstoffspeichermaterial zumindest im Wesentlichen eine Ti-Mn- oder La-Ni- Legierung, oder eine Ti-Mn-A- oder La-Ni-A- basierte Übergangsmetalllegierung ist, wobei A ausgewählt ist aus mindestens einem der chemischen Elemente Co, Cu, Al, Mo, Zr, V, Cr, Mn, Ce, Pr, Nd, Sm, Eu, Gd, Tb, Dy, Ho, Er, Tm, Yb und Lu.

10. Wasserstoffspeicherbehälter gemäß einem der Ansprüche 1 bis 7, **dadurch gekennzeichnet, dass** das erste hydrierbare Wasserstoffspeichermaterial zumindest im Wesentlichen die gleiche Zusammensetzung aufweist, wie das zweite Wasserstoffspeichermaterial und sich beide durch das jeweilige Herstellungsverfahren, die jeweilige Kristallitgröße, Anteile der enthaltenen chemischen Elemente und/oder die Partikelform/-größe unterscheiden.

11. Verfahren zur Aktivierung eines Wasserstoffspeicherbehälters gemäß einem der Ansprüche 1 bis 9, wobei der Hohlraum unter einer vorgegebenen Temperatur einer Wasserstoffatmosphäre mit wiederholt verändertem Druck ausgesetzt wird.
